# EUROPÄISCHE PATENTSCHRIFT

(11) **EP 3 969 304 B1**
(45) Veröffentlichungstag und Bekanntmachung des Hinweises auf die Patenterteilung: **26.07.2023**
(21) Anmeldenummer: 20724085.4
(22) Anmeldetag: 05.05.2020
(51) Int. Cl.: B60J 7/02, B60J 7/043

(54) **ANORDNUNG UND VERFAHREN ZUM BEWEGEN EINES DECKELS**
ASSEMBLY AND METHOD FOR MOVING A COVER
SYSTÈME ET PROCÉDÉ POUR DÉPLACER UN COUVERCLE

(30) Priorität: 17.05.2019 DE 102019113142
(43) Veröffentlichungstag der Anmeldung: 23.03.2022
(73) Patentinhaber: Webasto SE, 82131 Stockdorf (DE)
(72) Erfinder: ROLWES, Jan, 82131 Stockdorf (DE)
(74) Vertreter: Epping - Hermann - Fischer
(86) Internationale Anmeldenummer: PCT/EP2020/062439
(87) Internationale Veröffentlichungsnummer: WO 2020/233980

(56) Entgegenhaltungen:
- DE-A1-102012 106 545
- DE-A1-102016 220 991
- US-A- 5 228 743

## Beschreibung

Es wird eine Anordnung zum Bewegen eines Deckels für ein Fahrzeugdach angegeben. Zudem wird ein Verfahren zum Bewegen eines Deckels für ein Fahrzeugdach angegeben.

Derartige Anordnungen mit einem Deckel für ein Fahrzeugdach dienen beispielsweise dazu, den Deckel ausgehend von einer Schließstellung zum Verschließen einer Dachöffnung zum Öffnen durch eine Ausstellmechanik zunächst in seinem hinteren Bereich anzuheben und dann nach hinten in eine Offenstellung zu verschieben. Die DE 10 2006 045 632 B3 beschreibt hierzu beispielsweise ein sogenanntes Spoilerdach. Bei Spoilerdächern wird an einer in der Öffnungsrichtung hinteren Kante zunächst ein Ausstellhebel verdreht, um die Hinterkante des Deckels anzuheben. Der Deckel wird relativ zu dem Ausstellhebel in die Öffnungsrichtung verschoben, um eine Dachöffnung zumindest teilweise freizugeben. Der Ausstellhebel wird dabei relativ zum übrigen Fahrzeugdach festgehalten und nicht gemeinsam mit dem Deckel in die Öffnungsrichtung verschoben. Anders ist dies beispielsweise bei sogenannten außen geführten Schiebedächern, bei denen der Ausstellhebel an der hinteren Kante des Deckels zusammen mit dem Deckel relativ zu dem übrigen Fahrzeugdach in die Öffnungsrichtung verschoben wird.

Die DE 10 2012 106545 A1 offenbart den Oberbegriff des Anspruchs 1.

Es ist wünschenswert, eine Anordnung zum Bewegen eines Deckels für ein Fahrzeugdach anzugeben, die einen verlässlichen Betrieb ermöglicht. Es ist zudem wünschenswert, ein Verfahren zum Bewegen eines Deckels für ein Fahrzeugdach anzugeben, das verlässlich durchführbar ist.

Eine Anordnung zum Bewegen eines Deckels für ein Fahrzeugdach weist eine Mechanikkomponente auf. Die Mechanikkomponente ist mit dem Deckel gekoppelt. Beispielsweise ist die Mechanikkomponente ein Ausstellhebel, insbesondere ein Ausstellhebel, der einer in Hauptfahrtrichtung hinteren Kante des Deckels zugeordnet ist.

Die Anordnung weist einen Schlitten auf. Der Schlitten ist in einer Führungsschiene geführt. Die Anordnung weist ein Ausstellelement auf. Das Ausstellelement ist entlang einer Längsachse länglich ausgedehnt. Die Mechanikkomponente ist an einem ersten Ende des Ausstellelements mit dem Ausstellelement gekoppelt. Eine Bewegung des Schlittens entlang einer Längsrichtung ist abschnittsweise auf die Mechanikkomponente übertragbar. An einem zweiten Ende des Ausstellelements ist ein Verriegelungspin angeordnet. Der Verriegelungspin ist um die Längsachse des Ausstellelements rotierbar. Somit ist der Verriegelungspin zwischen einem ersten Zustand und einem zweiten Zustand bewegbar. Das Ausstellelement ist in dem ersten Zustand gegen eine Bewegung entlang der Längsrichtung relativ zu dem Schlitten verriegelt. Das Ausstellelement ist in dem zweiten Zustand gegen eine Bewegung entlang der Längsrichtung relativ zu der Führungsschiene verriegelt.

Mittels des rotierbaren Verriegelungspins ist somit eine Verriegelung des Ausstellelements realisiert. Entsprechend ist beispielsweise auch mittels der Rotierung des Verriegelungspins und mittels des Ausstellelements eine Verriegelung der Mechanikkomponente möglich. Die Rotation zum Verriegeln verwendet eine dreidimensionale Verriegelung. Somit ist ein verlässliches Verriegeln und Entriegeln realisiert. Dies ermöglicht beispielsweise auch eine Reduzierung von Schaltgeräuschen und/oder Reibungsverlusten. Die im Betrieb auftretenden Kraftvektoren können bei ansonsten gleichbleibenden Rahmenbedingungen flexibler eingestellt werden. Insbesondere ist eine Verriegelung senkrecht zur Längsachse möglich.

Gemäß zumindest einer Ausführungsform weist das Ausstellelement ein druck- und zugsteifes Kabel auf. Beispielsweise ist das Ausstellelement ein druck- und zugsteifes Kabel. An das Kabel ist beispielsweise der Verriegelungspin angebracht. Auch weitere Elemente können an das Kabel angebracht sein. Ein Kabel als Ausstellelement ist flexibel und verlässlich einsetzbar. Zudem ist ein Kabel vergleichsweise kostengünstig und für unterschiedlichste Anordnungen einfach konfektionierbar. Weiterhin weist ein Kabel eine Torsionsfederwirkung auf. Dies ist nutzbringend in Zusammenhang mit der Rotationsbewegung des Verriegelungspins zum Verriegeln und Entriegeln. Das Kabel ist beispielsweise nach Art eines Antriebskabels ausgebildet, die im Bereich der Dachanordnungen verwendet werden, um eine Antriebsenergie eines Elektromotors auf die Antriebsmechanik zu übertragen.

Gemäß zumindest einer Ausführungsform weist der Schlitten eine Schlittenkulisse auf. Die Schlittenkulisse wirkt mit dem Verriegelungspin zusammen. Mittels der Schlittenkulisse ist der Verriegelungspin zwischen dem ersten Zustand und dem zweiten Zustand bewegbar. Die Schlittenkulisse ist so ausgeformt, dass sie bei einer Längsbewegung der Schlittenkulisse den Verriegelungspin um die Längsrichtung rotiert. Der Schlitten ist beispielsweise ein Antriebsschlitten, der mit einem Antriebskabel verbunden ist.

Der Schlitten ist ausgebildet, ein Heben und Senken sowie ein Längsverschieben des Deckels zu verursachen.

Gemäß zumindest einer Ausführungsform weist die Schlittenkulisse eine Helixform auf. Die Schlittenkulisse verläuft spiralförmig. Die Schlittenkulisse verläuft schraubenförmig. Insbesondere verändert sich die Steigung beziehungsweise der Radius der Schlittenkulisse entlang ihres Verlaufs. Insofern ist es möglich, dass der Verlauf der Schlittenkulisse von einer idealen Helix abweicht.

Gemäß zumindest einer Ausführungsform weist die Schlittenkulisse einen sich entlang der Hochrichtung erstreckenden ersten Bereich auf. Die Schlittenkulisse weist einen sich entlang der Längsachse erstreckenden zweiten Bereich auf. Der erste Bereich und der zweite Bereich sind entlang einer Querrichtung beabstandet voneinander angeordnet. Insbesondere sind der erste Bereich und der zweite Bereich auch entlang der Längsrichtung und entlang der Hochrichtung beabstandet voneinander angeordnet. Der erste Bereich und der zweite Bereich sind somit gemäß Ausführungsformen in allen drei Raumrichtungen voneinander beabstandet. Dies ermöglicht die Rotation des Verriegelungspins, wenn dieser entlang der Schlittenkulisse bewegt wird.

Gemäß zumindest einer Ausführungsform weist ein Kulissenverlauf der Schlittenkulisse eine Komponente in Längsrichtung, eine Komponente in Hochrichtung und eine Komponente in Querrichtung auf. Der Kulissenverlauf der Schlittenkulisse erstreckt sich somit jeweils zumindest abschnittsweise entlang allen drei Raumrichtungen.

Gemäß zumindest einer Ausführungsform weist die Führungsschiene eine Verriegelungskulisse auf. Die Verriegelungskulisse wirkt mit dem Verriegelungspin zusammen. Dies ermöglicht ein Bewegen des Verriegelungspins zwischen dem ersten Zustand und dem zweiten Zustand. Die Verriegelungskulisse ist beispielsweise in einem Kulissengehäuse aus Kunststoff ausgebildet, das mit dem Teil der Führungsschiene verbunden ist, in dem der Schlitten geführt ist. Die Verriegelungskulisse ist ausgebildet, um den Verriegelungspin um die Längsachse zu verdrehen, wenn sich dieser entlang der Längsrichtung in der Verriegelungskulisse bewegt.

Gemäß zumindest einer Ausführungsform weist die Verriegelungskulisse eine Helixform auf. Die Helixform der Verriegelungskulisse und die Helixform der Schlittenkulisse sind insbesondere gegenläufig zueinander ausgestaltet. Vergleichbar zu der Schlittenkulisse weist die Verriegelungskulisse eine Spiralform und/oder eine Schraubenform auf. Die Steigung und/oder der Radius der Kulisse verändert sich insbesondere entlang der Verriegelungskulisse. Insofern ist es möglich, dass die Verriegelungskulisse von der ideale Helix abweicht.

Gemäß zumindest einer Ausführungsform weist die Verriegelungskulisse einen sich entlang einer Querrichtung erstreckenden ersten Bereich auf. Die Verriegelungskulisse weist gemäß einer Ausführungsform einen sich entlang der Längsachse erstreckenden zweiten Bereich auf. Der erste Bereich und der zweite Bereich sind entlang der Hochrichtung beabstandet voneinander angeordnet. Insbesondere sind der erste Bereich und der zweite Bereich der Verriegelungskulisse zusätzlich auch entlang der Längsrichtung und entlang der Querrichtung voneinander beabstandet. Der erste Bereich und der zweite Bereich der Verriegelungskulisse sind somit insbesondere in allen drei Raumrichtungen voneinander beabstandet angeordnet. Dies ermöglicht ein verlässliches Rotieren des Verriegelungspins, wenn der Verriegelungspin entlang der Verriegelungskulisse bewegt wird. Insbesondere ist der erste Bereich senkrecht zur Längsrichtung ausgerichtet. Dies ermöglicht ein verlässliches Verriegeln des Verriegelungspins entlang der Längsrichtung.

Gemäß zumindest einer Ausführungsform weist die Verriegelungskulisse einen Kulissenverlauf auf. Der Kulissenverlauf der Verriegelungskulisse weist eine Komponente in Längsrichtung, eine Komponente in Hochrichtung und eine Komponente in Querrichtung auf. Somit erstreckt sich der Kulissenverlauf jeweils zumindest abschnittsweise entlang aller drei Raumrichtungen.

Gemäß zumindest einer Ausführungsform ragt der Verriegelungspin in dem ersten Zustand durch die Verriegelungskulisse hindurch. In dem ersten Zustand ist der Verriegelungspin in Eingriff mit der Schlittenkulisse. Somit ist es möglich, dass bei einer Relativbewegung zwischen der Schlittenkulisse und der Verriegelungskulisse der Verriegelungspin um die Längsachse rotiert wird.

Gemäß zumindest einer Ausführungsform ist der Verriegelungspin starr an dem Ausstellelement fixiert. Beispielsweise ist der Verriegelungspin aus einem Kunststoff gebildet und unmittelbar an das Ausstellelement angegossen, angespritzt und/oder angeschäumt. Der Verriegelungspin ist beispielsweise in dem Bereich, in dem er an dem Ausstellelement befestigt ist, nicht relativ zu dem Ausstellelement rotierbar. Die Rotation des Verriegelungspins wird mittels einer Rotation des Ausstellelements realisiert. Beispielsweise ist das Ausstellelement in sich verdrehbar und verwindbar. Gemäß weiteren Ausführungsformen ist der Verriegelungspin relativ zu dem Ausstellelement verdrehbar, um die Rotationsbewegung ausführen zu können. Beispielsweise ist der Verriegelungspin mittels eines Drehgelenks an dem Ausstellelement befestigt.

Gemäß zumindest einer Ausführungsform weist der Verriegelungspin einen flexiblen Vorsprung auf. Der flexible Vorsprung greift in den zweiten Zustand in eine Nut der Führungsschiene ein. Somit ist der Verriegelungspin sicher und verlässlich in dem zweiten Zustand in einer verriegelten Position gehalten. Ein unerwünschtes Verlassen der Position im zweiten Zustand wird so vermieden.

Gemäß einem weiteren Aspekt wird ein Verfahren zum Bewegen eines Deckels für ein Fahrzeugdach angegeben. Das Verfahren wird beispielsweise mittels einer hier beschriebenen Anordnung gemäß zumindest einer Ausführungsform durchgeführt. Merkmale, Weiterbildungen und Vorteile der Anordnung gelten auch für das Verfahren und umgekehrt.

Ein entlang einer Längsachse länglich ausgedehntes Ausstellelements wird entlang einer Längsrichtung verschoben. Das Ausstellelement weist einen Verriegelungspin auf. Somit wird der Verriegelungspin insbesondere gemeinsam mit dem Ausstellelement entlang der Längsrichtung verschoben.

Mittels des Verschiebens des Ausstellelements wird eine Mechanikkomponente zum Bewegen des Deckels bewegt. Der Verriegelungspin wird um die Längsachse des Ausstellelements rotiert. Dadurch wird der Verriegelungspins zwischen einem ersten Zustand und einem zweiten Zustand bewegt. Das Ausstellelement ist in dem ersten Zustand gegen eine Bewegung entlang einer Längsrichtung relativ zu einem Schlitten verriegelt. In dem zweiten Zustand ist das Verriegelungselement gegen eine Bewegung entlang der Längsrichtung relativ zu einer Führungsschiene verriegelt.

Die Verriegelung und Entriegelung des Ausstellelements relativ zu der Führungsschiene erfolgt somit mittels einer Rotation des Verriegelungspins. Dies ermöglicht eine verlässliche Verriegelung.

Weitere Vorteile, Merkmale und Weiterbildungen ergeben sich aus den nachfolgenden, in Verbindung mit den Figuren erläuterten Beispielen. Gleiche, gleichartige und gleichwirkende Elemente können figurenübergreifend mit den gleichen Bezugszeichen versehen sein.

Es zeigen:
Figur 1 eine schematische Darstellung eines Fahrzeugs gemäß einem Ausführungsbeispiel,
Figur 2 eine schematische Darstellung einer Anordnung gemäß einem Ausführungsbeispiel,
Figuren 3 bis 6 schematische Darstellungen einer Schlittenkulisse gemäß einem Ausführungsbeispiel,
Figuren 7 bis 11 schematische Darstellungen einer Verriegelungskulisse gemäß einem Ausführungsbeispiel,
Figuren 12 bis 16 schematische Darstellungen eines Ausstellelements gemäß einem Ausführungsbeispiel,
Figur 17 eine schematische Darstellung einer Anordnung gemäß einem Ausführungsbeispiel,
Figuren 18 und 19 schematische Darstellungen des Verriegelungspins zu unterschiedlichen Zeitpunkten des Bewegungsablaufs, und
Figuren 20A, 20B bis Figuren 26A, 26B zeigen schematische Darstellungen einer Anordnung gemäß einem Ausführungsbeispiel zu unterschiedlichen Zeitpunkten eines Bewegungsablaufs.

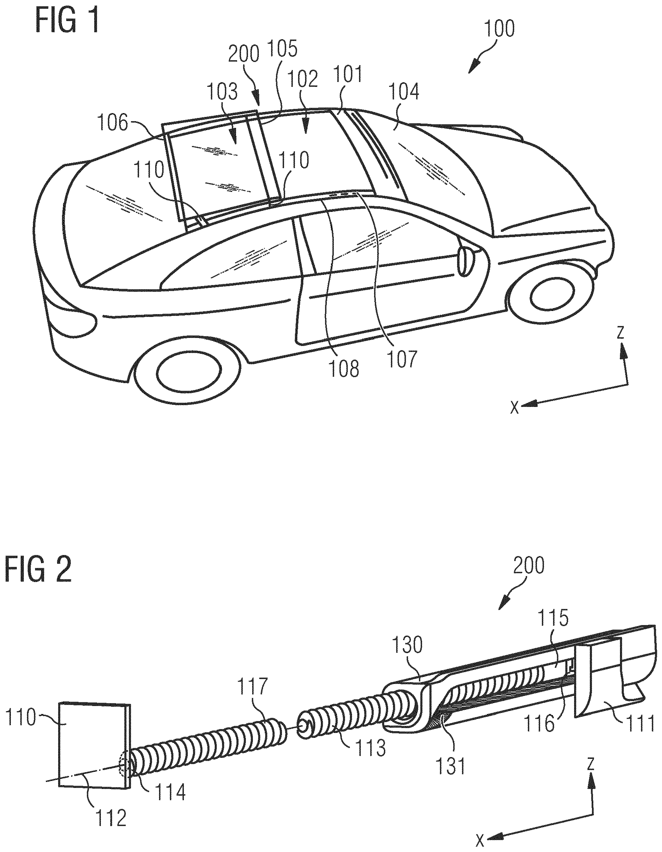

Figur 1 zeigt ein Fahrzeug 100 gemäß einem Ausführungsbeispiel. Das Fahrzeug 100 weist ein Fahrzeugdach 101 auf. An dem Fahrzeugdach 101 ist ein Deckel 103 angeordnet. Der Deckel 103 ist beispielsweise relativ zum übrigen Fahrzeugdach 101 beweglich. Somit kann eine Dachöffnung 102 wahlweise von dem Deckel 103 verschlossen werden oder teilweise freigegeben werden.

Das Fahrzeug weist eine Windschutzscheibe 104 auf. Der Deckel 103 weist eine Vorderkante 105 auf, die im betriebsgemäßen Zustand der Windschutzscheibe 104 zugewandt ist. Eine Hinterkante 106 des Deckels 103 ist entlang einer Längsrichtung X der Windschutzscheibe 104 abgewandt.

Die Bewegung des Deckels 103 wird mittels einer Ausstellmechanik realisiert. Die Ausstellmechanik weist beispielsweise eine Führungsschiene 107 auf, die mit dem Fahrzeugdach 101 verbunden ist. In der Führungsschiene ist beispielsweise ein Antriebskabel 108 geführt. Das Antriebskabel ist beispielsweise in Kontakt mit einem elektrischen Antriebsmotor und weiteren Komponenten der Ausstellmechanik. Die Ausstellmechanik weist eine Anordnung 200 auf, die im Folgenden näher erläutert wird.

Verwendete Ortsangaben oder Richtungsangaben, wie hinten oder vorne, oben oder unten, links oder rechts, sind auf eine Fahrzeuglängsachse und eine übliche Fahrtrichtung eines betriebsbereiten Fahrzeugs 100 bezogen. Die Fahrzeuglängsachse kann auch als eine horizontale Achse oder X-Achse in zugehöriger X-Richtung bezeichnet werden. Die Fahrzeugquerachse kann auch als eine horizontale Achse oder Y-Achse in zugehöriger Y-Richtung bezeichnet werden. Die Fahrzeughochachse kann auch als vertikale Achse oder Z-Achse in zugehöriger Z-Richtung bezeichnet werden. Die Hochrichtung, die Querrichtung und die Längsrichtung sind insbesondere jeweils senkrecht zueinander ausgerichtet.

Figur 2 zeigt die Anordnung 100 gemäß einem Ausführungsbeispiel. Die Anordnung 200 weist einen Schlitten 111 auf. Der Schlitten 111 ist in der Figur 2 nur in einem Ausschnitt dargestellt. Der Schlitten 111 ist in der Führungsschiene 107 geführt.

Die Anordnung 100 weist ein Ausstellelement 113 auf. Das Ausstellelement 113 ist entlang einer Längsachse 112 länglich ausgedehnt. Das Ausstellelement 113 weist entlang der Längsachse 112 eine deutlich größere Ausdehnung auf als quer zu der Längsachse 112.

Die Anordnung 200 weist ein Kulissengehäuse 130 auf. Das Kulissengehäuse ist beispielsweise aus einem Kunststoff gebildet und starr mit der Führungsschiene 107 gekoppelt.

Das Ausstellelement 113 ist mit einem ersten Ende 114 mit einer Mechanikkomponente 110 gekoppelt. Die Mechanikkomponente 110 ist beispielsweise ein Ausstellhebel zum Bewegen des Deckels 103 entlang der Hochrichtung Z. Gemäß weiteren Ausführungsbeispielen ist die Mechanikkomponente 110 ein anderes Element, beispielsweise ein vorderer Ausstellhebel zum Bewegen des Deckels 103.

Beispielsweise ist der Deckel 103 nach Art eines sogenannten Spoilerdachs ausgebildet. Ein hinterer Ausstellhebel, der der Hinterkante 106 zugeordnet ist, wird relativ zu der Führungsschiene 107 unbeweglich verriegelt, nach dem die Hinterkante 106 in Z-Richtung angehoben wurde, ausgehend von einer Schließposition. In der Schließposition wird die Dachöffnung 102 von dem Deckel 103 verschlossen. Bei einem nachfolgenden Verschieben des Deckels 103 in die Längsrichtung X nach hinten wird der hintere Ausstellhebel 110 nicht zusammen mit dem Deckel 103 bewegt. Die Verriegelung des hinteren Ausstellhebels ist beispielsweise mittels der Anordnung 200 realisiert.

An einem vorderen, zweiten Ende 115 des Ausstellelements 113 ist ein Verriegelungspin 116 angeordnet. Der Verriegelungspin 116 ist beispielsweise aus einem Kunststoff gebildet. Der Verriegelungspin 116 ist insbesondere starr mit dem Ausstellelement 113 verbunden. Der Verriegelungspin 116 springt radial über das Ausstellelement 113 vor. Die Haupterstreckungsrichtung des Verriegelungspins 116 verläuft quer zur Längsachse 112 des Ausstellelements 113. Der Verriegelungspin 116 steht insbesondere senkrecht über das Ausstellelement 113 vor.

Das Ausstellelement 113 ist beispielsweise als druck- und zugsteifes Kabel 117 ausgebildet. Beispielsweise ist das Kabel 117 nach Art des Antriebskabels 108 ausgebildet. Das Antriebskabel 108 und das Kabel 117 sind separat zueinander ausgebildet.

Das Kulissengehäuse 113 weist eine Verriegelungskulisse 131 auf. Der Verriegelungspin 116 ist in der Verriegelungskulisse 131 geführt. Der Verriegelungspin 116 ist relativ zum Kulissengehäuse 130 in der Verriegelungskulisse 131 verschiebbar. Insbesondere ist der Verriegelungspin 116 im Betrieb stets in der Verriegelungskulisse 131 angeordnet.

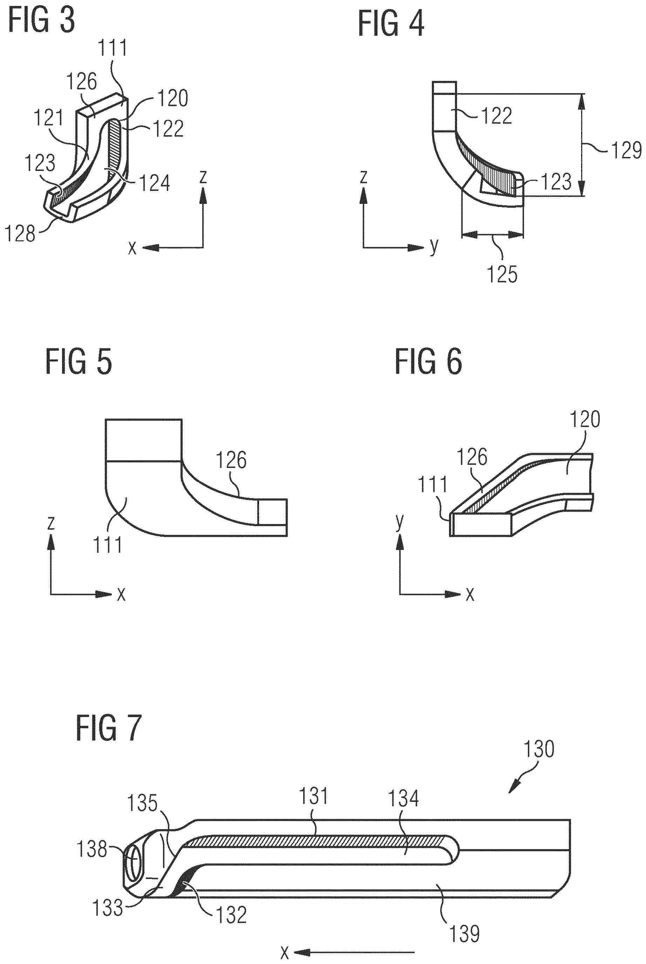

Figuren 3 bis 6 zeigen einen Ausschnitt des Schlittens 111 gemäß einem Ausführungsbeispiel in verschiedenen Ansichten.

Der Schlitten 111 weist eine Schlittenkulisse 120 auf. Die Schlittenkulisse 120 dient zum Führen des Verriegelungspins 116. Der Verriegelungspin 116 ist im Betrieb zumindest zeitweise in der Schlittenkulisse 120 geführt. Der Verriegelungspin 116 verlässt die Schlittenkulisse 120 zumindest zeitweise. Wenn der Verriegelungspin 116 nicht in der Schlittenkulisse 120 angeordnet ist, ist es möglich, dass sich der Schlitten 111 unabhängig von dem Verriegelungspin 116 bewegt.

Die Schlittenkulisse 120 weist eine Helixform 121 auf. Die Schlittenkulisse weist einen ersten Bereich 122 auf. Der erste Bereich 122 erstreckt sich im Wesentlichen in Z-Richtung. Die Schlittenkulisse 120 weist einen zweiten Bereich 123 auf. Der zweite Bereich 123 erstreckt sich im Wesentlichen in X-Richtung.

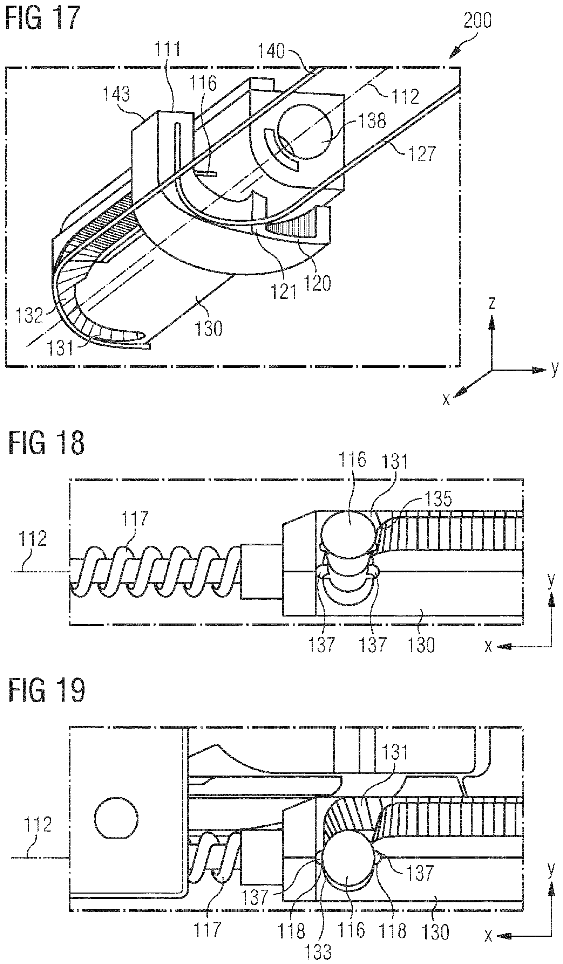

Der erste Bereich 122 und der zweite Bereich 123 sind sowohl in X-Richtung, in Y-Richtung als auch in Z-Richtung zueinander beabstandet. Entlang der Querrichtung Y weisen der erste Bereich 122 und der zweite Bereich 123 einen Abstand 125 zueinander auf (Figur 4). Entlang der Hochrichtung Z weisen der erste Bereich 122 und der zweite Bereich 123 einen Abstand 129 zueinander auf (Figur 4). Zwischen dem ersten Bereich 122 und dem zweiten Bereich 123 ist der Übergangsbereich 124 angeordnet, der insbesondere kurvenförmig verläuft. Die Schlittenwand 126 begrenzt die Schlittenkulisse 120 folglich so, dass die Schlittenkulisse einen dreidimensionalen Kulissenverlauf 127 (Figur 17) aufweist. Der Kulissenverlauf 127 weist insbesondere im Übergangsbereich 124 sowohl eine Komponente entlang der Längsrichtung X als auch eine Komponente in Querrichtung Y und eine Komponente in Hochrichtung Z auf. Der den Bodenbereich abschließende Teil der Schlittenwand 126 unterläuft zwischen dem ersten Bereich 122 und dem zweiten Bereich 123 eine Drehung um 90°.

Am zweiten Bereich 123 weist die Schlittenkulisse 120 ein offenes Ende 128 auf. An dem offenen Ende 128 ist es möglich, dass der Verriegelungspin 116 aus der Schlittenkulisse 120 auskoppelt und in die Schlittenkulisse 120 einkoppelt.

Ausgehend von der Schließposition des Deckels 103 bewegt sich der Verriegelungspin 116 beispielsweise zunächst entlang der Schlittenkulisse 120 und koppelt dann aus der Schlittenkulisse 120 aus. Nachfolgend bewegt sich der Schlitten 111 folglich weiter, ohne den Verriegelungspin 116 zu führen.

Ausgehend von der Schließposition ist der Verriegelungspin 116 beispielsweise zunächst im ersten Bereich 122 angeordnet. Aufgrund der Ausrichtung im Wesentlichen in Z-Richtung der Schlittenkulisse 120 wird der Verriegelungspin 116 von dem Schlitten 111 entlang der Längsrichtung X mit bewegt, wenn der Schlitten 111 entlang der Längsrichtung X verschoben wird. Der Verriegelungspin 116 ist relativ zum Schlitten 111 zunächst entlang der X-Richtung unbeweglich verriegelt.

Aufgrund der Helixform 121 wird der Verriegelungspin 116 im Zusammenwirken mit der Verriegelungskulisse 131 um die Längsachse 112 beziehungsweise die Längsrichtung 100x verdreht. Die Verdrehung erfolgt insbesondere um 90°, bis der Verriegelungspin 116 in den zweiten Bereich 123 der Schlittenkulisse 120 gelangt.

Zwischen dem Zustand, in dem der Verriegelungspin 116 relativ zu dem Schlitten 111 verriegelt ist, und dem Zustand, in dem eine Relativbewegung zwischen dem Verriegelungspin 116 und dem Schlitten 111 entlang der Längsrichtung 100x unabhängig voneinander freigegeben ist, durchläuft der Verriegelungspin 116 eine Rotation um 90° +/- 5°. Beispielsweise ist der Verriegelungspin 116 zunächst im Wesentlichen entlang der Querrichtung Y ausgerichtet. Aufgrund der Rotation ist der Verriegelungspin 116 im Wesentlichen entlang der Z-Richtung ausgerichtet, wenn er die Schlittenkulisse 120 verlassen hat.

Figuren 7 bis 11 zeigen das Kulissengehäuse 130 gemäß einem Ausführungsbeispiel in verschiedenen Ansichten.

Das Kulissengehäuse 130 weist eine Gehäusewand 139 auf. Die Gehäusewand 139 umgibt die Verriegelungskulisse 131. Die Verriegelungskulisse 131 weist eine Helixform 132 auf. Die Verriegelungskulisse 131 weist einen ersten Bereich 133 auf, der sich im Wesentlichen entlang der Querrichtung Y erstreckt. Der erste Bereich 133 ist in Längsrichtung X hinten angeordnet.

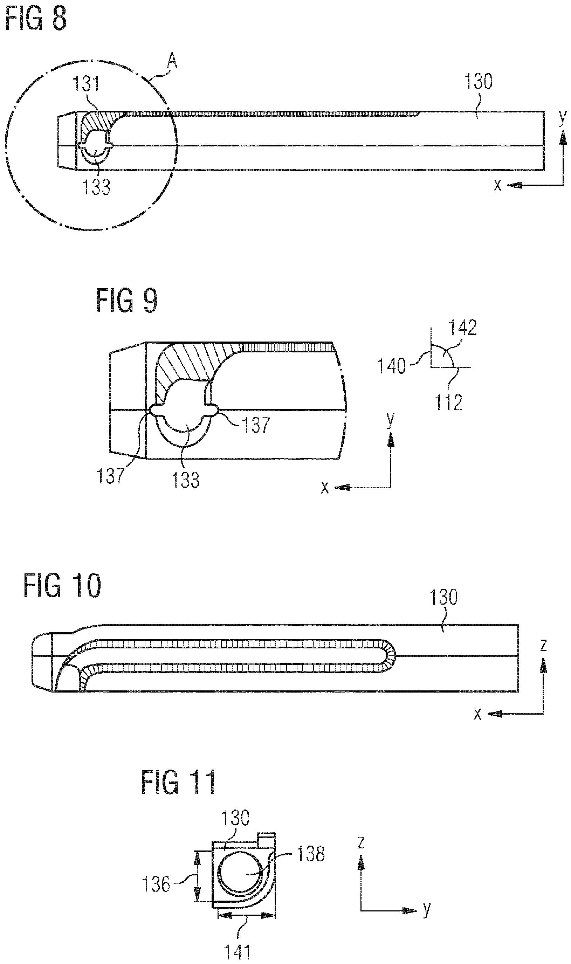

Die Verrieglungskulisse 131 weist einen zweiten Bereich 134 auf. Der zweite Bereich 134 erstreckt sich im Wesentlichen entlang der Längsrichtung X. Zwischen dem ersten Bereich 133 und dem zweiten Bereich 134 ist ein Übergangsbereich 135 ausgebildet. Der Übergangsbereich 135 erstreckt sich kurvenförmig. Der erste Bereich 133 ist in einem Abstand 136 entlang der Hochrichtung Z von dem zweiten Bereich 134 angeordnet (Figur 11). Der erste Bereich 133 ist von dem zweiten Bereich 134 in einem Abstand 141 entlang der Querrichtung Y angeordnet (Figur 11).

Ein Kulissenverlauf 140 (Figur 17) der Verriegelungskulisse 131 erstreckt sich zunächst entlang der Längsrichtung X, dann schraubenförmig mit einer Komponente entlang der Längsrichtung X, der Querrichtung Y und der Hochrichtung Z und nachfolgend entlang der Querrichtung Y.

Die Gehäusewand 139 begrenzt die Verriegelungskulisse 131 folglich so, dass die Verriegelungskulisse 131 einen dreidimensionalen Kulissenverlauf 140 (Figur 17) aufweist. Der Kulissenverlauf 140 weist insbesondere im Übergangsbereich 135 sowohl eine Komponente entlang der Längsrichtung X als auch eine Komponente in Querrichtung Y und eine Komponente in Hochrichtung Z auf. Der den Seitenbereich abschließende Teil der Gehäusewand 139 unterläuft zwischen dem ersten Bereich 133 und dem zweiten Bereich 134 eine Drehung um 90°.

Im Betrieb ist der Verriegelungspin 116 ausgehend von der Schließposition des Deckels 103 beispielsweise zunächst im ersten Bereich 133 angeordnet. Der Verriegelungspin 116 ist in der Verriegelungskulisse 131 zunächst so geführt, dass eine Relativbewegung entlang der Längsrichtung X zwischen dem Verriegelungspin 116 und dem Kulissengehäuse 113 freigegeben ist.

An dem in Längsrichtung X hinteren Ende der Verriegelungskulisse 131 zwingt die Verriegelungskulisse 131, insbesondere der Übergangsbereich 135, den Verriegelungspin 116 zu einer Rotation um die Längsachse 112. Dies geschieht insbesondere im Zusammenwirken mit der Schlittenkulisse 120. Der Verriegelungspin 116 wird insbesondere um etwa 90° um die Längsachse gedreht, sodass der Verriegelungspin in dem zweiten Bereich 134 angeordnet ist.

In dem zweiten Bereich 134 ist eine Bewegung des Verriegelungspins 116 entlang der Längsrichtung X relativ zum Kulissengehäuse 130 blockiert. Die Gehäusewand 139 des Kulissengehäuses 130 blockiert eine Bewegung des Verriegelungspins 116 entlang der Längsrichtung X. Somit ist auch das Ausstellelement 113 entlang der Längsrichtung X verriegelt.

In dem ersten Bereich 133 ist der Verriegelungspin 116 beispielsweise im Wesentlichen entlang der Querrichtung Y ausgerichtet. In dem zweiten Bereich 134 ist der Verriegelungspin 116 beispielsweise im Wesentlichen entlang der Hochrichtung Z ausgerichtet.

Das Kulissengehäuse 130 weist eine Ausnehmung 138 auf. Durch die Ausnehmung 138, die an einem dem zweiten Bereich 134 benachbarten Ende des Kulissengehäuses 130 angeordnet ist, erstreckt sich im Betrieb das Ausstellelement 113. Somit ist eine Kopplung des Verriegelungspins 116 mit der Verriegelungskulisse 131 möglich, wobei ein Großteil des Ausstellelements 113 außerhalb des Kulissengehäuses 130 angeordnet ist.

Ein Winkel 142 (Figur 9) zwischen der Längsachse 112 und dem Kulissenverlauf 140 im zweiten Bereich 134 ist insbesondere 90° +/- 10°, insbesondere 90° +/- 1°. Der Kulissenverlauf 140 erstreckt sich im zweiten Bereich 134 insbesondere senkrecht zur Längsachse 112. Somit begrenzt die Gehäusewand 139 des Kulissengehäuses 130 die Bewegung des Verriegelungspins 116 senkrecht zur Längsachse 112. Entlang der Längsachse 112 treten die Hauptkräfte auf, die im Betrieb auf dem Verriegelungspin 116 und das Ausstellelement 113 wirken, wenn der Verriegelungspin 116 im zweiten Bereich 134 angeordnet ist. Aufgrund der senkrechten Ausrichtung der Gehäusewand 139 im zweiten Bereich 134 des Kulissengehäuses 130 werden keine wesentlichen Kraftkomponenten entlang der Hochrichtung Z oder entlang der Querrichtung Y auf dem Verriegelungspin 116 eingewirkt. Somit ist eine verlässliche Verrieglung des Verriegelungspins 116 möglich.

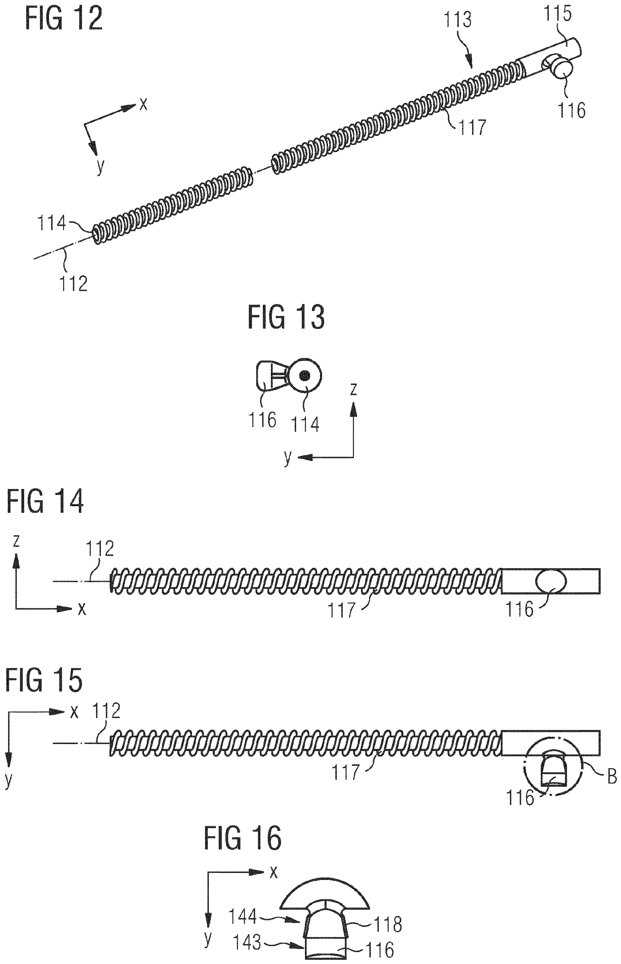

In dem zweiten Bereich 134 weist das Kulissengehäuse 130 zwei Nuten 137 auf. Es können auch mehr oder weniger als zwei Nuten 137 vorgesehen sein. Der Verriegelungspin 116 weist korrespondierende flexible Vorsprünge 118 auf (Figur 16). Im verriegelten Zustand greifen die flexiblen Vorsprünge 118 in die Nuten 137 ein und arretieren so den Verriegelungspin 116 zusätzlich im zweiten Bereich 134 der Verriegelungskulisse 131. Diese einfache Form der Arretierung ist ausreichend, da keine wesentlichen Kräfte im Betrieb auftreten, die den Verriegelungspin 116 aus dem zweiten Bereich 134 ungewollt herausbewegen.

Figuren 12 bis 16 zeigen das Ausstellelement 113 mit dem Verriegelungspin 116 gemäß einem Ausführungsbeispiel in verschiedenen Ansichten. Der Verriegelungspin 116 steht radial vor, um sowohl mit der Schlittenkulisse 120 als auch mit der Verriegelungskulisse 131 in Eingriff gelangen zu können. Der Verriegelungspin 116 weist einen Verriegelungsbereich 144 auf. Der Verriegelungsbereich 144 ist ausgebildet, in der Verriegelungskulisse 131 geführt zu werden. Der Verriegelungspin 116 weist einen Schlittenbereich 143 auf. Der Schlittenbereich 143 ist ausgebildet, in der Schlittenkulisse 120 geführt zu werden. Der Schlittenbereich 143 ist an einem dem Ausstellelement 113 abgewandten Ende des Verriegelungspins 116 ausgebildet. Der Verriegelungsbereich 144 ist zwischen dem Ausstellelement 113 und dem Schlittenbereich 143 ausgebildet. Die flexiblen Vorsprünge 118 sind an dem Verriegelungsbereich 144 ausgebildet. Der Verriegelungsbereich 144 und der Schlittenbereich 143 sind insbesondere an einem einzigen Verriegelungspin 116 gemeinsam ausgebildet.

Der Verriegelungspin 116 erstreckt sich im Betrieb zumindest teilweise durch die Verriegelungskulisse 131 hindurch bis in die Schlittenkulisse 120 hinein. Der Verriegelungspin 116 ist im Betrieb zumindest zeitweise sowohl in der Schlittenkulisse 120 geführt als auch in der Verriegelungskulisse 131. Insbesondere, wenn der Verriegelungspin 116 in dem zweiten Bereich 134 der Verriegelungskulisse 131 angeordnet ist, ist der Verriegelungspin 116 nur in der Verriegelungskulisse 131 geführt und nicht in der Schlittenkulisse 120.

Figur 17 zeigt eine perspektivische Darstellung eines Teils der Anordnung 200. Der Verriegelungspin 116 springt radial zur Längsachse 112 vor. Der Verriegelungspin 116 erstreckt sich durch das Kulissengehäuse 130 hindurch und steht über das Kulissengehäuse 130 vor. Insbesondere steht der Schlittenbereich 143 des Verriegelungspins über das Kulissengehäuse 130 über. Der Schlittenbereich 143 des Verriegelungspins 116 ist in der Schlittenkulisse 120 angeordnet.

Die Schlittenkulisse 120 und die Verriegelungskulisse 131 geben somit gemeinsam die Bewegung entlang der Längsrichtung X und die Rotation um die Längsachse 112 des Verriegelungspins 116 vor. Die Kulissenverläufe 127 und 140 sind gegenläufig und insbesondere versetzt zueinander. Der Schlitten 111 und das Kulissengehäuse 130 sind relativ zueinander entlang der Längsrichtung X verschiebbar. Eine Rotation oder eine Bewegung entlang der Querrichtung Y oder eine Bewegung entlang der Hochrichtung Z zwischen dem Schlitten 111 und dem Kulissengehäuse 130 ist nicht möglich. Der erste Bereich 122 der Schlittenkulisse 120 wirkt vorrangig mit dem zweiten Bereich 134 und dem Übergangsbereich 135 der Verriegelungskulisse 131 zusammen.

Der Verriegelungspin 116 wird aufgrund des Kulissenverlaufs 127 der Schlittenkulisse 120 von dem Schlitten 111 entlang dem ersten Bereich 134 in Längsrichtung X verschoben und dann im Übergangsbereich 135 verdreht. Diese Verdrehung ist möglich, da auch die Schlittenkulisse 120 den gekrümmten Übergangsbereich 124 aufweist. Insbesondere wird der Verriegelungspin um 90° verdreht. Die Verdrehung des Verriegelungspins zum Verriegeln und Entriegeln verläuft insbesondere nicht in einer einzigen Ebene. Die Die Verdrehung des Verriegelungspins zum Verriegeln und Entriegeln verläuft insbesondere in alle drei Raumrichtungen.

Der erste Bereich 133 der Verriegelungskulisse 131 wirkt mit dem zweiten Bereich 123 der Schlittenkulisse 120 zusammen. Der zweite Bereich 123 mit dem offenen Ende 128 ermöglicht die Verriegelung des Verriegelungspins 116 entlang der Längsrichtung X in dem ersten Bereich 133 der Verriegelungskulisse 131.

Die Verdrehung des Verriegelungspins 116 um die Längsachse 112 wird auch aus den Figuren 18 und 19 nochmals ersichtlich.

Figur 18 zeigt den Verriegelungspin 116 im Übergangsbereich 135 der Verrieglungskulisse 131. Der Verriegelungspin 116 ist in einer Zwischenposition gezeigt, in der er weder vollständig entlang der Querrichtung Y noch vollständig entlang der Hochrichtung Z ausgerichtet ist.

Die Schlittenkulisse 120 und die Verriegelungskulisse 131 erzwingen bei einer Relativbewegung des Schlittens 111 relativ zum Kulissengehäuse 130 die Rotation des Verriegelungspins 116.

Demnach wird der Verriegelungspin 116 in die Position gedreht, die in Figur 19 dargestellt ist. Die flexiblen Vorsprünge 118 greifen in die Nuten 137 ein. Der Verriegelungspin 116 wird von den sich in einer YZ-Ebene erstreckenden Gehäusewänden 139 des Kulissengehäuses 130 gehalten. Kräfte, die mittels des Ausstellelements 113 an den Verriegelungspin 116 übertragen werden, wirken vorrangig entlang der Längsachse 112 beziehungsweise der Längsrichtung X. Aufgrund der senkrechten Ausrichtung der Gehäusewand 139 im ersten Bereich 133 der Verriegelungskulisse 131 bewirken diese Kräfte keine Rotation des Verriegelungspins 116 aus dem ersten Bereich 133 hinaus. Diese Rotation wird lediglich mittels des Schlittens 111 und der Schlittenkulisse 120 verursacht.

Die Anordnung 200 ermöglicht eine Reduzierung von Schaltgeräuschen, Reibungsverlusten und ruckartigen Bewegungen während der Verriegelung, die herkömmlich bei Verriegelungen auftreten können, die keine 90°-Verriegelung erlauben. Die dreidimensional kreuzenden Schlittenkulisse 120 und Verriegelungskulisse 131 stehen 90° zueinander. Somit können auch Längskräfte in Bewegungsrichtung des Ausstellelements 113 vermieden werden. Somit ist eine Selbsthemmung realisierbar. Zusätzliche separate Bauteile zur Sicherung des Verriegelungspins 116 in der Verriegelungsposition können vermieden werden. Komplexe Toleranzketten aufgrund vieler Bauteile, die unterschiedlich zueinander eingreifen, können vermieden werden. Die Anordnung 200 ist vergleichsweise kostengünstig realisierbar. Eine mechanische Zwangssteuerung ist einfach und ohne Elektronikkomponenten realisierbar. Die Anordnung 200 nutzt sämtliche drei Raumrichtungen in Form der zwei gegenläufig gestalteten helixförmigen Kulissen 120 und 131. Die Schlittenkulisse 120 und die Verriegelungskulisse 131 wirken mit dem um die Längsachse 112 drehbaren Verriegelungspin 116 zusammen. Im Betrieb durchläuft der Verriegelungspin 116 eine Rotation um die Längsachse 112 von 90°.

Zur Sicherung des Verriegelungspins 116 in der Verriegelungslage ist die Verriegelungskulisse 131 mit der Nut 137 versehen. In die Nut 137 können die flexiblen Vorsprünge 118, die auch als Nasen bezeichnet werden können, einklippen. Die Torsionsfederwirkung des Kabels 117 unterstützt die Sicherung des Verriegelungspins 116 in der Verriegelungslage zusätzlich.

Die Anordnung 200 ermöglicht eine 90°-Kreuzverriegelung. Somit werden reduzierte Schaltgeräusche sowie eine selbsthemmende Wirkung bezüglich Fehlentriegelung unter Krafteinwirkung realisiert.

Alternativ oder zusätzlich ermöglicht die Anordnung 200 eine verminderte Komplexität und mehr Robustheit bezüglich der Toleranzbetrachtung durch Zwangsführung. Beispielsweise ist am offenen Ende 128 ein Fangtrichter für den Verriegelungspin 116 ausgebildet. Dieser ist beispielsweise federnd mit Überschneidung zur Verriegelungskulisse 131 ausgelegt und kann somit Toleranzlagen des Kulissengehäuses 130 und/oder des Schlittens 111 und/oder des Verrieglungspins 116 abfangen. Die Produktion der Elemente der Anordnung 200 ist zudem MRP-konform, also konform einer systematischen Materialbedarfsplanung gegebenenfalls mit Einbeziehung von Kapazitäten.

Die einzelnen Elemente der Anordnung 200 sind modular miteinander kombinierbar. Bauteile, die der Verriegelung dienen, können wölbungsunabhängig eingesetzt und übernommen werden. Die Wölbung bezieht sich hierbei beispielsweise auf eine Wölbung des Deckels 103 und/oder der Führungsschiene 107. Die Länge des Kabels 117 kann je nach Fahrzeugdach 101 unterschiedlich lang im Werkzeug eingestellt werden. Das Werkzeug zur Herstellung, insbesondere zur Umspritzung und Herstellung des Verriegelungspins 116, ist somit für unterschiedliche Ausgestaltungen des Fahrzeugdachs 101 verwendbar. Störgeräusche, die herkömmlich bei starren Verriegelungshebeln beziehungsweise Steuerstangen auftreten, können vermieden werden. Zudem ist die Herstellung kosteneffizient. Es muss kein projektspezifisches Stanzwerkzeug für eine Steuerstange bereitgestellt werden. Alternativ oder zusätzlich muss kein projektspezifisches Umspritzungswerkzeug für eine Steuerstange bereitgestellt werden. Die herkömmlich häufig eingesetzte umspritzte Steuerstange mit Sicherungsfeder kann entfallen. Stattdessen wird das modular für verschiedene Projekte verwendbare umspritzte Kabel 117 verwendet. Die Verriegelungskulisse 131 und die Schlittenkulisse 120 können in bereits vorhandene Elemente integriert werden. Der Entwicklungsaufwand und/oder das Entwicklungsrisiko sind reduzierbar aufgrund von Übernahmemöglichkeiten des Verrieglungselements in unterschiedliche Projekte.

Eine redundante Sicherung der Verrieglung des Verriegelungspins 116 mittels Torsionsfeder und Klipverrastung ist möglich. Die flexiblen Vorsprünge 118 verrasten dazu in der Nut 137. Die Verriegelungskulisse 131 verformt sich dazu beispielsweise im elastischen Bereich und wirkt als Feder. Der Eingriff des Vorsprungs 118 in die Nut 117 wirkt im Fall von Belastungen entlang der Längsrichtung X des Kabels 117 selbsthemmend gegenüber einer Verdrehung.

Der Verrieglungsmechanismus mittels den beiden helixförmigen Kulissen 120, 130 ist für verschiedenste Mechaniksysteme anwendbar, bei denen zwei Gleitelemente miteinander gekoppelt und entkoppelt werden. Eine Verrastungsmöglichkeit ist in der Verrieglungskulisse 131 gegeben.

Insgesamt ist somit eine einfache, kostengünstige und verlässliche Verriegelung und Entriegelung realisiert.

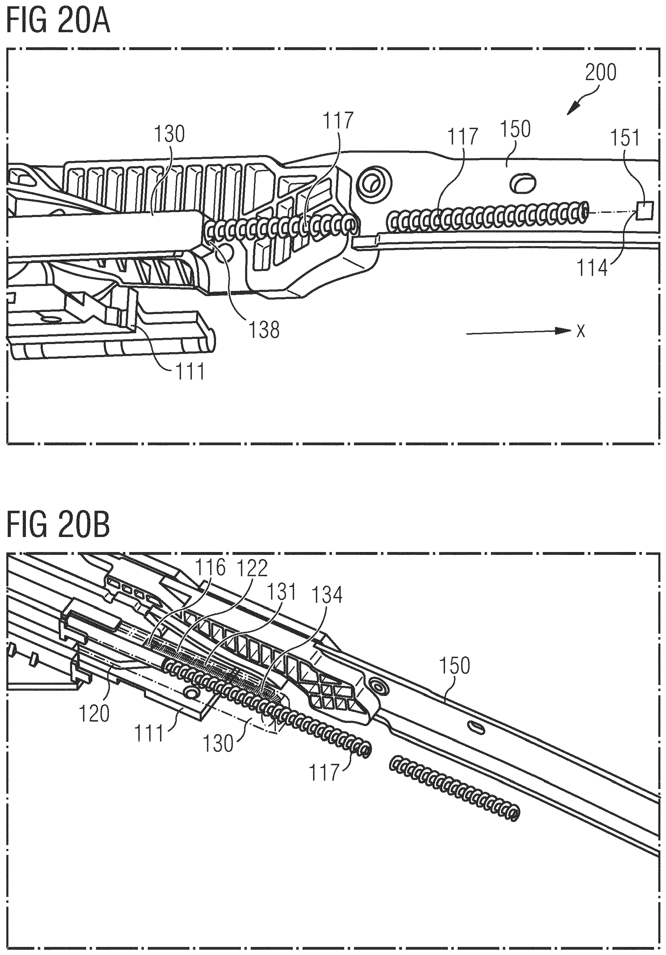

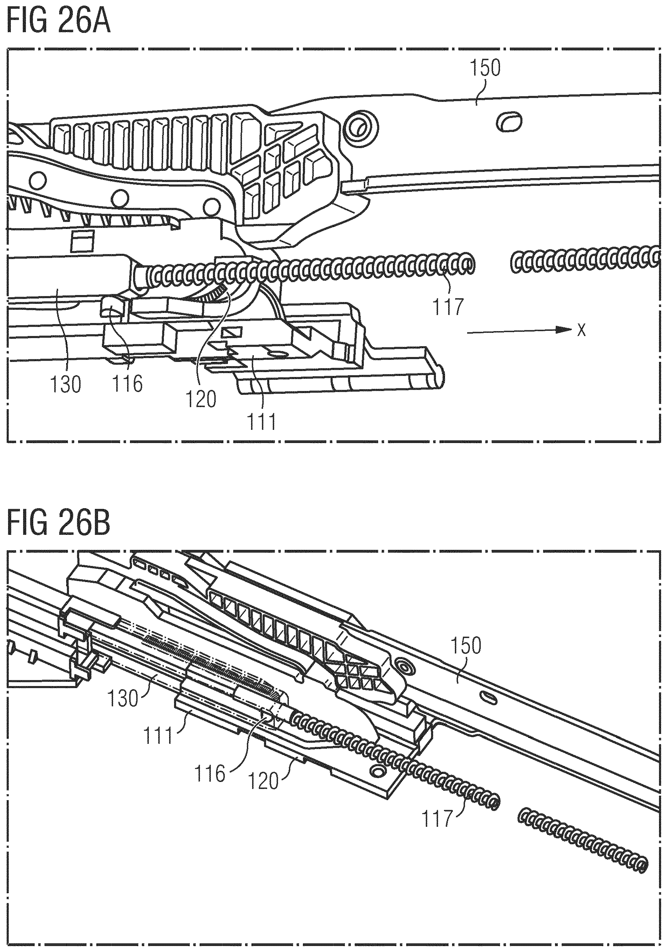

Figuren 20A, B bis Figuren 26A, B zeigen jeweils die Anordnung 200 gemäß einem Ausführungsbeispiel zu unterschiedlichen Zeitpunkten eines Bewegungsablaufs der Anordnung 200. Die Figuren 20A bis 26A zeigen dabei jeweils eine perspektivische Ansicht von unten. Die Figuren 20B bis 26B zeigen jeweils eine perspektivische Ansicht von oben.

Figuren 20A, B zeigen die Anordnung 200 in einer Position, in der der Deckel 103 die Dachöffnung 102 verschließt. Der Deckel 103 ist mit einem Deckelträger 150 verbunden. Der Deckelträger 150 dient zur Kopplung des Deckels 103 mit der Ausstellmechanik beziehungsweise der Anordnung 200.

In dem gezeigten Ausführungsbeispiel ist die Anordnung 200 nach Art eines Spoilerdachs ausgebildet. Die Mechanikkomponente 110 ist als hinterer Ausstellhebel 151 ausgebildet. Der hintere Ausstellhebel 151 dient zum Anheben einer Hinterkante 106 des Deckels 103. Beim Verschieben des Deckels 103 entlang der X-Richtung relativ zum übrigen Fahrzeugdach ist der hintere Ausstellhebel 151 mit der Führungsschiene 107 verriegelt. Der Deckel 103 wird relativ zum Ausstellhebel 151 entlang der X-Richtung verschoben, um in seine Offenstellung verschoben zu werden. Diesbezüglich weicht das Ausführungsbeispiel der Figuren 20A, B bis 26A, B von dem Ausführungsbeispiel ab, das in Figur 1 gezeigt ist.

Die Verriegelung des hinteren Ausstellhebels 151 erfolgt mittels des Kabels 117 und des Verriegelungspins 116 gemeinsam mit der Verriegelungskulisse 131, wie nachfolgend erläutert wird.

Zum Ausschwenken des hinteren Ausstellhebels 151 wird der Schlitten 111 in X-Richtung verschoben. Der Verriegelungspin 116 ist im ersten Bereich 122 der Schlittenkulisse 120 angeordnet. Daher nimmt der Schlitten 111 den Verriegelungspin 116 in X-Richtung mit. Die Bewegung des Schlittens 111 in X-Richtung wird auf den Verriegelungspin 116 übertragen. Die Bewegung des Verriegelungspins 116 in X-Richtung in der Verriegelungskulisse 131 ist freigegeben, da der Verriegelungspin 116 im zweiten Bereich 134 der Verriegelungskulisse 131 angeordnet ist. Der zweite Bereich 134 der Verriegelungskulisse 131 erstreckt sich ebenfalls in X-Richtung und blockiert daher die Bewegung des Verriegelungspins 116 nicht.

Die Verschiebung des Verriegelungspins 116 entlang der X-Richtung führt zu einem Verschieben des Kabels 117 in X-Richtung. Das Verschieben des Kabels 117 führt zu einem Ausstellen des hinteren Ausstellhebels 151. Dies führt wiederum zu einem Anheben der Hinterkante 106 des Deckels 103 in Z-Richtung.

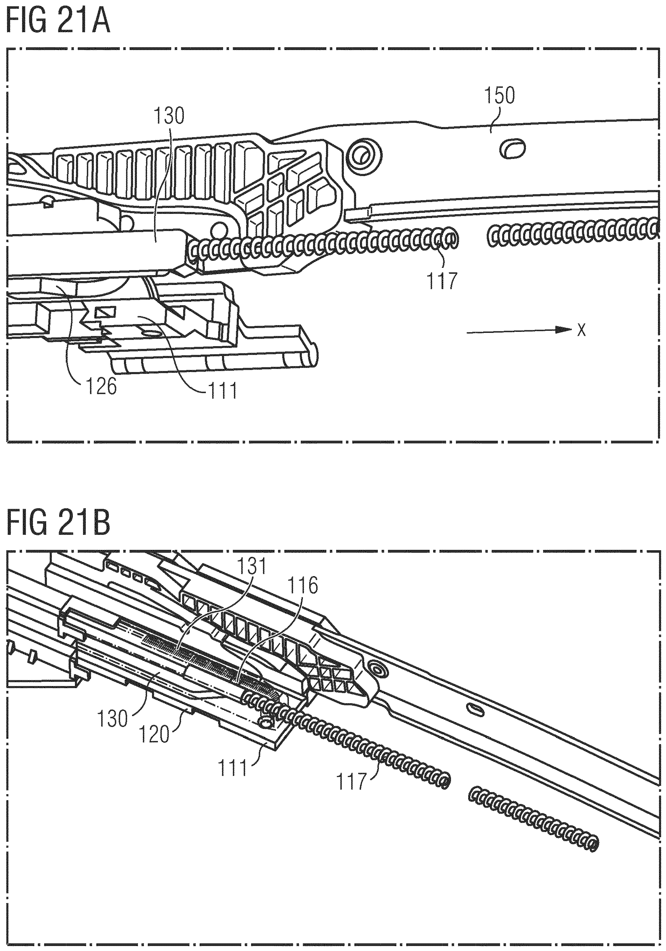

In Figuren 21A, B ist der Schlitten 111 weiter in X-Richtung verschoben. Der Verriegelungspin wird aufgrund der Verriegelung in der Schlittenkulisse 102 in X-Richtung mitgeführt, da er weiterhin im zweiten Bereich 134 der Verriegelungskulisse 131 angeordnet ist. Dies führt zu einem weiteren Ausstellen des Ausstellhebels 151. Hierbei bewegt sich der Schlitten 111 in X-Richtung relativ zu dem Deckelträger 150. Eine Bewegung des Deckelträgers 150 in X-Richtung ist blockiert und wird erst zu einem späteren Zeitpunkt freigegeben.

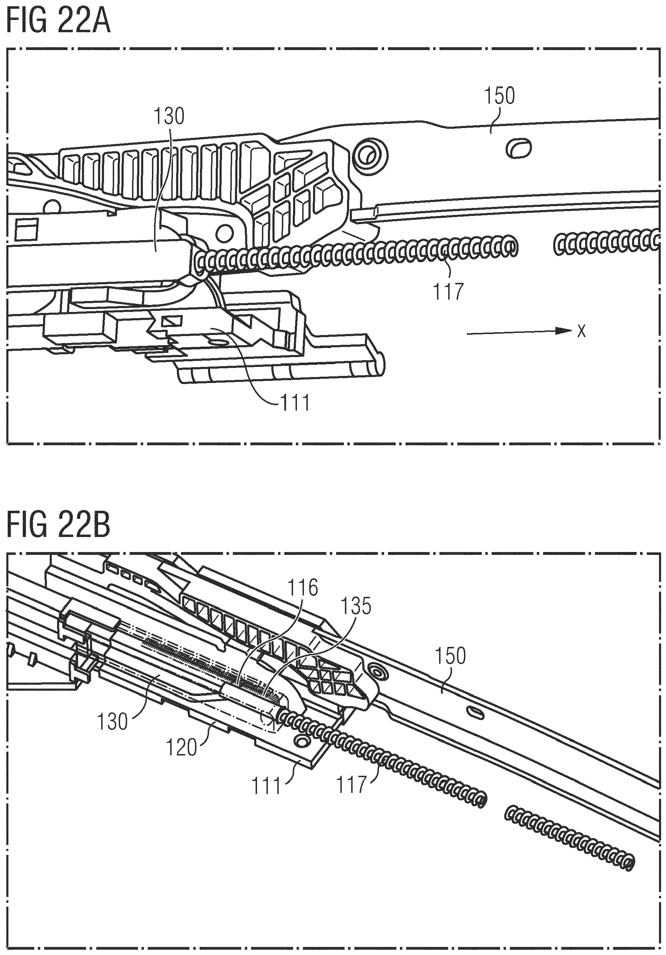

Figuren 22A, B zeigen den Verriegelungspin 116, wenn er entlang der X-Richtung an das Ende des zweiten Bereichs 134 der Verriegelungskulisse 131 verschoben wurde. Der Ausstellhebel 151 ist vollständig ausgestellt. Nun erfolgt die Entkopplung des Kabels 117 von der Schlittenbewegung 111 und die Verriegelung des Kabels 117 mit der Führungsschiene 107. Mittels des Kabels 117 ist dann auch der Ausstellhebel 151 verriegelt.

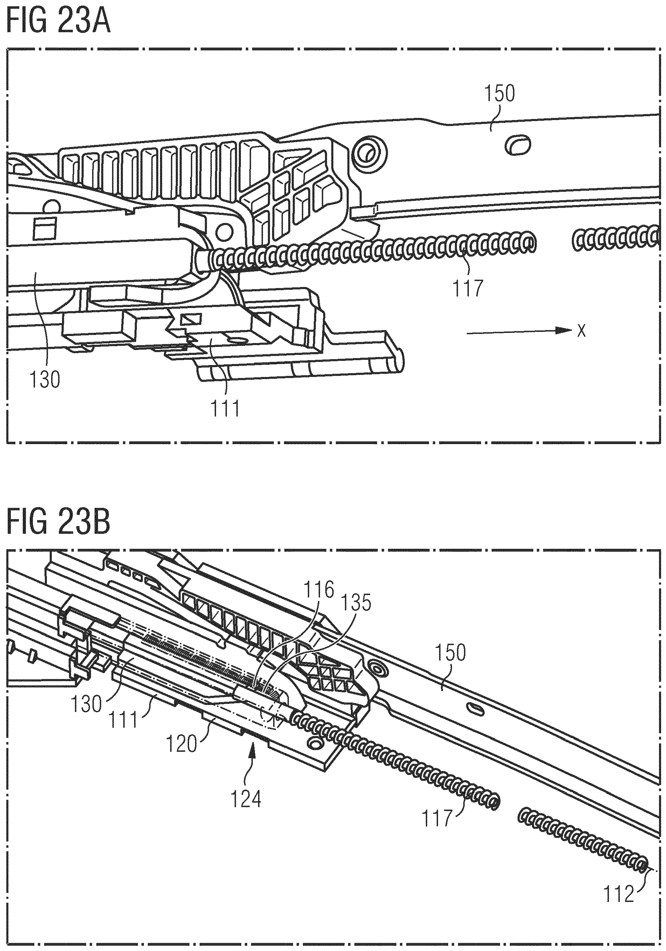

Figuren 23A, 23B zeigen den Verriegelungspin 116 im Übergangsbereich 135 der Verriegelungskulisse 131 sowie im Übergangsbereich 124 der Schlittenkulisse 120. Die Helixform 121, 132 der beiden Kulissen 120, 131 führt zu der Rotation des Verriegelungspins 116 um die Längsachse 112 des Kabels 117. Dadurch, dass die Helixform 121, 132 der beiden Kulissen 120, 131 gegenläufig ist, führt das Verschieben des Schlittens 111 in X-Richtung zu der Rotation des Verriegelungspins 116. Die Schlittenkulisse 120 drückt beim Verschieben des Schlittens 111 in X-Richtung den Verriegelungspin 116 im Übergangsbereich 124 in X-Richtung. Die Helixform 121 der Schlittenkulisse 120 und die Helixform 132 der Verriegelungskulisse 131 transformiert diese Kraft in X-Richtung in Kräfte in negativer Z-Richtung und in Y-Richtung zu einer Kraft, die die Rotation des Verriegelungspins 116 verursacht.

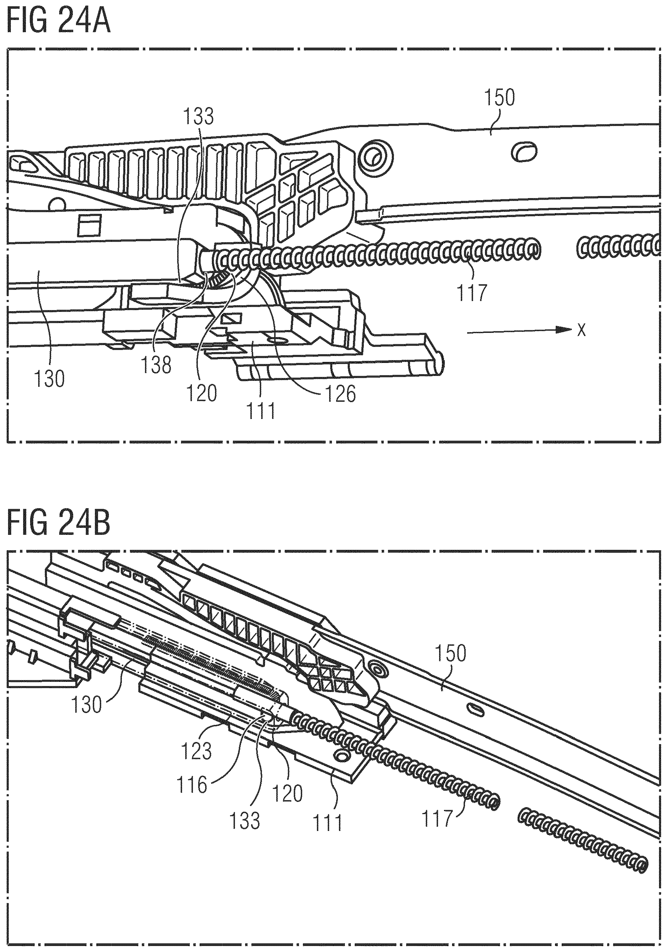

Figuren 24A, B zeigen den Verriegelungspin 116 nach vollständiger Rotation um 90°. Der Verriegelungspin 116 ist im ersten Bereich 133 der Verriegelungskulisse 131 angeordnet. Somit ist der Verriegelungspin 116 entlang der X-Richtung relativ zum Kulissengehäuse 130 blockiert. Dieses Blockieren des Verriegelungspins 116 führt auch zu einem Blockieren des Kabels 117. Dies führt wiederum zu einer Blockade des Ausstellhebels 151 gegen ein Verschwenken. Somit ist der Ausstellhebel 151 mittels des Kabels 117 und des Verriegelungspins 116 relativ zu dem Kulissengehäuse 130 verriegelt. Der Deckelträger 150 und der Deckel 103 befinden sich in der Lüfterstellung, in der die Hinterkante 106 in Z-Richtung deutlich über die Vorderkante 105 angehoben ist.

Die weitere Bewegung des Schlittens 111 in X-Richtung ist relativ zu dem Verriegelungspin 116 freigegeben. Der Verriegelungspin 116 ist in dem zweiten Bereich 123 der Schlittenkulisse 120 angeordnet. Diese erstreckt sich im Wesentlichen entlang der X-Richtung und blockiert somit eine Relativbewegung zwischen der Schlittenkulisse 120 und dem Verriegelungspin 116 entlang der X-Richtung nicht. Der Schlitten 111 ist relativ zu dem Verriegelungspin 116 und damit relativ zu dem Kabel 117 und dem Ausstellhebel 151 weiter in X-Richtung verschiebbar.

Die weitere Verschiebung des Schlittens 111 führt beispielsweise zu einem Anheben der Vorderkante 105 des Deckels 103 und nachfolgend zu einem Verschieben des Deckels 103 in X-Richtung relativ zum übrigen Fahrzeugdach 101 zum Freigeben der Dachöffnung 102. Hierfür ist der Schlitten 111 in diesem Zustand beispielsweise mit dem Deckelträger 150 so gekoppelt und/oder verriegelt, dass der Deckelträger 150 der Bewegung des Schlittens 111 in X-Richtung folgt.

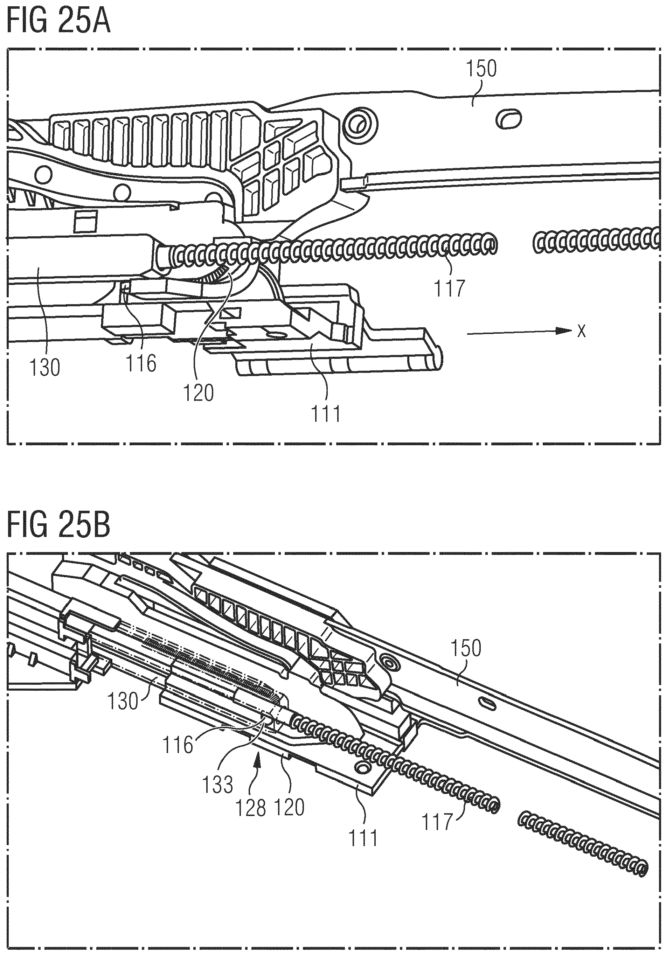

Figuren 25A, B zeigen den Zustand, an dem der Verriegelungspin 116 die Schlittenkulisse 120 am offenen Ende 128 verlässt, da der Schlitten 111 weiter in X-Richtung verschoben wird. Der Verriegelungspin 116 und das Kabel 117 folgen dieser Bewegung des Schlittens 111 nicht mehr, da der Verriegelungspin 116 aufgrund der Ausrichtung des ersten Bereichs 133 der Verriegelungskulisse 131 relativ zum Kulissengehäuse 130 in X-Richtung verriegelt ist. Eine ungewünschte Rotation des Verriegelungspins 116 aus dem ersten Bereich 133 der Verriegelungskulisse 131 hinaus wird beispielsweise vermieden mittels einer Torsionskraft des Kabels 117. Alternativ oder zusätzlich wird das unerwünschte Hinausdrehen mittels der flexiblen Vorsprünge 118 in Eingriff mit den Nuten 137 vermieden, wie insbesondere auch aus Figur 19 ersichtlich ist.

Auch bei einem weiteren Verschieben des Schlittens 111 in X-Richtung zum Verschieben des Deckels 103 bleibt somit das Kabel 117 mit dem Verriegelungspin 116 sicher in dem Kulissengehäuse 130 verriegelt, wie in Figuren 26A, B dargestellt ist. Das weitere Anheben und Verschieben des Deckelträgers 150 ohne einem gleichzeitigen Verschieden des Ausstellhebels 151 ist somit verlässlich möglich. Der Schlitten 111 verschiebt nachfolgend den Deckelträger 150 in X-Richtung relativ zum Ausstellhebel 151, der mittels des Kabels 117 und des Verriegelungspins 116 sicher gehalten ist.

Eine Schließbewegung des Deckels verläuft korrespondierend zum beschriebenen Öffnungsvorgang in umgekehrter Reihenfolge.

### Bezugszeichen

- 100: Fahrzeug
- 101: Fahrzeugdach
- 102: Dachöffnung
- 103: Deckel
- 104: Windschutzscheibe
- 105: Vorderkante
- 106: Hinterkante
- 107: Führungsschiene
- 108: Antriebskabel

- 110: Mechanikkomponente
- 111: Schlitten
- 112: Längsachse
- 113: Ausstellelement
- 114: erstes Ende
- 115: zweites Ende
- 116: Verriegelungspin
- 117: Kabel
- 118: flexibler Vorsprung

- 120: Schlittenkulisse
- 121: Helixform
- 122: erster Bereich
- 123: zweiter Bereich
- 124: Übergangsbereich
- 125: Abstand
- 126: Schlittenwand
- 127: Kulissenverlauf
- 128: offenes Ende
- 129: Abstand
- 130: Kulissengehäuse
- 131: Verriegelungskulisse
- 132: Helixform
- 133: erster Bereich
- 134: zweiter Bereich
- 135: Übergangsbereich
- 136: Abstand
- 137: Nut
- 138: Ausnehmung
- 139: Gehäusewand
- 140: Kulissenverlauf
- 141: Abstand
- 142: Winkel
- 143: Schlittenbereich
- 144: Verriegelungsbereich

- 150: Deckträger
- 151: Ausstellhebel

- 200: Anordnung

- X: Längsrichtung
- Y: Querrichtung
- Z: Hochrichtung

## Patentansprüche

1. Anordnung zum Bewegen eines Deckels (103) für ein Fahrzeugdach (101), aufweisend:
- eine Mechanikkomponente (110), die mit dem Deckel (103) gekoppelt ist,
- einen Schlitten (111), der in einer Führungsschiene (107) geführt ist, und
- ein entlang einer Längsachse (112) länglich ausgedehntes Ausstellelement (113), wobei
- die Mechanikkomponente (110) an einem ersten Ende (114) des Ausstellelements (113) mit dem Ausstellelement (113) gekoppelt ist, um eine Bewegung des Schlittens (111) entlang einer Längsrichtung (X) abschnittsweise auf die Mechanikkomponente (110) zu übertragen,
- an einem zweiten Ende (115) des Ausstellelements (113) ein Verriegelungspin (116) angeordnet ist, **dadurch gekennzeichnet, dass**
- der Verriegelungspin (116) um die Längsachse (112) des Ausstellelements (113) rotierbar ist, um zwischen einem ersten Zustand und einem zweiten Zustand bewegt zu werden, wobei das Ausstellelement (113) in dem ersten Zustand gegen eine Bewegung entlang der Längsrichtung (X) relativ zu dem Schlitten (111) verriegelt ist und in dem zweiten Zustand gegen eine Bewegung entlang der Längsrichtung (X) relativ zu der Führungsschiene (107) verriegelt ist.

2. Anordnung nach Anspruch 1, bei der das Ausstellelement (113) ein druck- und zugsteifes Kabel (117) aufweist.

3. Anordnung nach Anspruch 1 oder 2, bei der der Schlitten (111) eine Schlittenkulisse (120) aufweist, die mit dem Verriegelungspin (116) zusammenwirkt, um den Verriegelungspin (116) zwischen dem ersten Zustand und dem zweiten Zustand zu bewegen.

4. Anordnung nach Anspruch 3, bei der die Schlittenkulisse (120) eine Helixform (121) aufweist.

5. Anordnung nach Anspruch 3 oder 4, bei der die Schlittenkulisse (120) einen sich entlang der Hochrichtung (Z) erstreckenden ersten Bereich (122) aufweist und einen sich entlang der Längsachse (X) erstreckenden zweiten Bereich (123) aufweist, wobei der erste Bereich (122) und der zweite Bereich (123) entlang einer Querrichtung (Y) beabstandet voneinander angeordnet sind.

6. Anorndnung nach einem der Ansprüche 3 bis 5, bei der ein Kulissenverlauf (127) der Schlittenkulisse (120) eine Komponente in Längsrichtung (X), eine Komponente in Hochrichtung (Z) und eine Komponente in Querrichtung (Y) aufweist.

7. Anordnung nach einem der Ansprüche 1 bis 6, bei der die Führungsschiene (107) eine Verriegelungskulisse (131) aufweist, die mit dem Verriegelungspin (116) zusammenwirkt, um den Verriegelungspin (116) zwischen dem ersten Zustand und dem zweiten Zustand zu bewegen.

8. Anordnung nach Anspruch 7, bei der die Verriegelungskulisse (131) eine Helixform (132) aufweist.

9. Anordnung nach Anspruch 7 oder 8, bei der die Verriegelungskulisse (131) einen sich entlang einer Querrichtung (Y) erstreckenden ersten Bereich (133) aufweist und einen sich entlang der Längsachse (X) erstreckenden zweiten Bereich (134) aufweist, wobei der erste Bereich (133) und der zweite Bereich (134) entlang der Hochrichtung (Z) beabstandet voneinander angeordnet sind.

10. Anordnung nach einem der Ansprüche 7 bis 9, bei der ein Kulissenverlauf (140) der Verriegelungskulisse (131) eine Komponente in Längsrichtung (X), eine Komponente in Hochrichtung (Z) und eine Komponente in Querrichtung (Y) aufweist.

11. Anordnung nach einem der Ansprüche 2 bis 10, bei der der Verriegelungspin (116) in dem ersten Zustand durch die Verriegelungskulisse (131) hindurchragt und in Eingriff mit der Schlittenkulisse (120) ist.

12. Anordnung nach einem der Ansprüche 1 bis 11, bei der der Verriegelungspin (116) starr an dem Ausstellelement (113) fixiert ist.

13. Anordnung nach einem der Ansprüche 1 bis 12, bei der der Verriegelungspin (116) einen flexiblen Vorsprung (118) aufweist, der in dem zweiten Zustand in eine Nut (137) der Führungsschiene (107) eingreift.

14. Anordnung nach einem der Ansprüche 1 bis 13, bei der die Mechanikkomponente (110) ein Hebel ist zum Anheben und Absenken des Deckels (103).

15. Verfahren zum Bewegen eines Deckels (103) für ein Fahrzeugdach (101), aufweisend:
- Verschieben eines entlang einer Längsachse (112) länglich ausgedehntes Ausstellelements (113) entlang einer Längsrichtung (X), das einen Verriegelungspin (116) aufweist, dadurch
- Bewegen einer Mechanikkomponente (110) zum Bewegen des Deckels (103), und **gekennzeichnet durch**
- Rotieren des Verriegelungspins (116) um die Längsachse (112) des Ausstellelements (113), und dadurch
- Bewegen des Verriegelungspins (116) zwischen einem ersten Zustand und einem zweiten Zustand, wobei das Ausstellelement (113) in dem ersten Zustand gegen eine Bewegung entlang der Längsrichtung (X) relativ zu einem Schlitten (111) verriegelt ist und in dem zweiten Zustand gegen eine Bewegung entlang der Längsrichtung (X) relativ zu einer Führungsschiene (107) verriegelt ist.

## Claims

1. Assembly for moving a cover (103) for a vehicle roof (101), comprising:
- a mechanical component (110) which is coupled to the cover (103),
- a carriage (111) which is guided in a guide rail (107), and
- a deployment element (113) which is extended along a longitudinal axis (112) in an elongate manner, wherein
- the mechanical component (110) is coupled to the deployment element (113) at a first end (114) of said deployment element (113), in order to transmit a movement of the carriage (111) along a longitudinal direction (X) in sections to the mechanical component (110),
- a locking pin (116) is arranged at a second end (115) of the deployment element (113), **characterized in that**
- the locking pin (116) can be rotated about the longitudinal axis (112) of the deployment element (113), in order to be moved between a first state and a second state, wherein the deployment element (113) is locked in the first state preventing movement along the longitudinal direction (X) relative to the carriage (111), and is locked in the second state preventing movement along the longitudinal direction (X) relative to the guide rail (107).

2. Assembly according to Claim 1, wherein the deployment element (113) comprises a cable (117) with compressive and tensile strength.

3. Assembly according to Claim 1 or 2, wherein the carriage (111) has a carriage slot (120) which interacts with the locking pin (116), in order to move the locking pin (116) between the first state and the second state.

4. Assembly according to Claim 3, wherein the carriage slot (120) has a helical shape (121).

5. Assembly according to Claim 3 or 4, wherein the carriage slot (120) has a first region (122) extending along the vertical direction (Z) and has a second region (123) extending along the longitudinal axis (X), wherein the first region (122) and the second region (123) are arranged spaced apart from one another along a transverse direction (Y).

6. Assembly according to one of Claims 3 to 5, wherein a slot course (127) of the carriage slot (120) comprises one component in the longitudinal direction (X), one component in the vertical direction (Z), and one component in the transverse direction (Y).

7. Assembly according to one of Claims 1 to 6, wherein the guide rail (107) has a locking slot (131) which interacts with the locking pin (116), in order to move the locking pin (116) between the first state and the second state.

8. Assembly according to Claim 7, wherein the locking slot (131) has a helical shape (132).

9. Assembly according to Claim 7 or 8, wherein the locking slot (131) has a first region (133) extending along a transverse direction (Y) and has a second region (134) extending along the longitudinal axis (X), wherein the first region (133) and the second region (134) are arranged spaced apart from one another along the vertical direction (Z).

10. Assembly according to one of Claims 7 to 9, wherein a slot course (140) of the locking slot (131) has one component in the longitudinal direction (X), one component in the vertical direction (Z), and one component in the transverse direction (Y).

11. Assembly according to one of Claims 2 to 10, wherein the locking pin (116) projects through the locking slot (131) in the first state and is engaged with the carriage slot (120).

12. Assembly according to one of Claims 1 to 11, wherein the locking pin (116) is rigidly fixed to the deployment element (113).

13. Assembly according to one of Claims 1 to 12, wherein the locking pin (116) has a flexible projection (118) which engages with a groove (137) in the guide rail (107) in the second state.

14. Assembly according to one of Claims 1 to 13, wherein the mechanical component (110) is a lever for raising and lowering the cover (103).

15. Method for moving a cover (103) for a vehicle roof (101), comprising:
- displacement of a deployment element (113), which is extended along a longitudinal axis (112) in an elongate manner, along a longitudinal direction (X), which has a locking pin (116),
resulting in
- movement of a mechanical component (110) to move the cover (103), and **characterized by**
- rotation of the locking pin (116) about the longitudinal axis (112) of the deployment element (113), and therefore
- movement of the locking pin (116) between a first state and a second state, wherein the deployment element (113) is locked in the first state preventing movement along the longitudinal direction (X) relative to a carriage (111), and is locked in the second state preventing movement along the longitudinal direction (X) relative to a guide rail (107).

## Revendications

1. Ensemble permettant de déplacer un panneau de fermeture (103) pour un toit de véhicule (101), présentant :
- un composant mécanique (110) qui est accouplé au panneau de fermeture (103),
- un coulisseau (111) qui est guidé dans un rail de guidage (107), et
- un élément de relevage (113) étendu de manière allongée de long d'un axe longitudinal (112), dans lequel
- le composant mécanique (110) est accouplé à l'élément de relevage (113) à une première extrémité (114) de l'élément de relevage (113), afin de transmettre au composant mécanique (110) un déplacement du coulisseau (111) le long d'une direction longitudinale (X) dans certaines parties,
- une goupille de blocage (116) est disposée à une deuxième extrémité (115) de l'élément de relevage (113),
**caractérisé en ce que**
- la goupille de blocage (116) peut tourner autour de l'axe longitudinal (112) de l'élément de relevage (113), afin d'être déplacée entre un premier état et un deuxième état, l'élément de relevage (113) étant bloqué dans le premier état de manière à empêcher un déplacement le long de la direction longitudinale (X) par rapport au coulisseau (111) et étant bloqué dans le deuxième état de manière à empêcher un déplacement le long de la direction longitudinale (X) par rapport au rail de guidage (107).

2. Ensemble selon la revendication 1, dans lequel l'élément de relevage (113) présente un câble (117) rigide en compression et en traction.

3. Ensemble selon la revendication 1 ou 2, dans lequel le coulisseau (111) présente une coulisse de coulisseau (120) qui coopère avec la goupille de blocage (116), afin de déplacer la goupille de blocage (116) entre le premier état et le deuxième état.

4. Ensemble selon la revendication 3, dans lequel la coulisse de coulisseau (120) présente une forme hélicoïdale (121).

5. Ensemble selon la revendication 3 ou 4, dans lequel la coulisse de coulisseau (120) présente une première région (122) s'étendant le long de la direction verticale (Z) et présente une deuxième région (123) s'étendant le long de l'axe longitudinal (X), la première région (122) et la deuxième région (123) étant disposées de manière espacée l'une de l'autre le long d'une direction transversale (Y).

6. Ensemble selon l'une des revendications 3 à 5, dans lequel une allure (127) de la coulisse de coulisseau (120) présente une composante dans la direction longitudinale (X), une composante dans la direction verticale (Z) et une composante dans la direction transversale (Y).

7. Ensemble selon l'une des revendications 1 à 6, dans lequel le rail de guidage (107) présente une coulisse de blocage (131) qui coopère avec la goupille de blocage (116), afin de déplacer la goupille de blocage (116) entre le premier état et le deuxième état.

8. Ensemble selon la revendication 7, dans lequel la coulisse de blocage (131) présente une forme hélicoïdale (132) .

9. Ensemble selon la revendication 7 ou 8, dans lequel la coulisse de blocage (131) présente une première région (133) s'étendant le long d'une direction transversale (Y) et présente une deuxième région (134) s'étendant le long de l'axe longitudinal (X), la première région (133) et la deuxième région (134) étant disposées de manière espacée l'une de l'autre le long de la direction verticale (Z).

10. Ensemble selon l'une des revendications 7 à 9, dans lequel une allure (140) de la coulisse de blocage (131) présente une composante dans la direction longitudinale (X), une composante dans la direction verticale (Z) et une composante dans la direction transversale (Y).

11. Ensemble selon l'une des revendications 2 à 10, dans lequel la goupille de blocage (116) traverse la coulisse de blocage (131) dans le premier état et est en prise avec la coulisse de coulisseau (120).

12. Ensemble selon l'une des revendications 1 à 11, dans lequel la goupille de blocage (116) est fixée rigidement à l'élément de relevage (113).

13. Ensemble selon l'une des revendications 1 à 12, dans lequel la goupille de blocage (116) présente une saillie souple (118) qui vient en prise dans une rainure (137) du rail de guidage (107) dans le deuxième état.

14. Ensemble selon l'une des revendications 1 à 13, dans lequel le composant mécanique (110) est un levier permettant de relever et d'abaisser le panneau de fermeture (103).

15. Procédé permettant de déplacer un panneau de fermeture (103) pour un toit de véhicule (101), présentant :
- le coulissement, le long d'une direction longitudinale (X), d'un élément de relevage (113) étendu de manière allongée le long d'un axe longitudinal (112), lequel élément de relevage présente une goupille de blocage (116), par conséquent
- le déplacement d'un composant mécanique (110) permettant de déplacer le panneau de fermeture (103), et
**caractérisé par**
- la rotation de la goupille de blocage (116) autour de l'axe longitudinal (112) de l'élément de relevage (113), et par conséquent
- le déplacement de la goupille de blocage (116) entre un premier état et un deuxième état, l'élément de relevage (113) étant bloqué dans le premier état de manière à empêcher un déplacement le long de la direction longitudinale (X) par rapport à un coulisseau (111) et étant bloqué dans le deuxième état de manière à empêcher un déplacement le long de la direction longitudinale (X) par rapport à un rail de guidage (107).
